Europäisches Patentamt

European Patent Office

Office européen des brevets

(11) Veröffentlichungsnummer: **0 307 627 B1**

(12) **EUROPÄISCHE PATENTSCHRIFT**

(45) Veröffentlichungstag der Patentschrift: **29.04.92**

(51) Int. Cl.⁵: **H04L 9/00**

(21) Anmeldenummer: **88113189.0**

(22) Anmeldetag: **13.08.88**

(54) **Verfahren zur Erzeugung und Verteilung von Geheimschlüsseln.**

(30) Priorität: **04.09.87 CH 3407/87**

(43) Veröffentlichungstag der Anmeldung:
**22.03.89 Patentblatt 89/12**

(45) Bekanntmachung des Hinweises auf die
Patenterteilung:
**29.04.92 Patentblatt 92/18**

(84) Benannte Vertragsstaaten:
**CH DE FR GB LI NL SE**

(56) Entgegenhaltungen:
**EP-A- 0 090 771**

**DATA COMMUNICATIONS, Band 15, Nr. 4,
April 1986, Seiten 149-160, New York, US;
C.R. ABBRUSCATO et al.: "Choosing a key
management style that suits the application"**

**PROCEEDINGS OF THE FIFTH INTERNATIO-
NAL CONFERENCE ON COMPUTER COMM-
UNICATION, Atlanta, Oktober 1980, Seiten
525-530, New York, US; D.W. DAVIES et al.:
"The application of digital signatures based
on public key cryptosystems"**

(73) Patentinhaber: **Ascom Radiocom AG
Feldstrasse 42
CH-8036 Zürich(CH)**

(72) Erfinder: **Bärlocher, Siegfried
Waldmatt 8
CH-5242 Birr(CH)**
Erfinder: **Hartmann, Peter
Narzissenstrasse 4
CH-5212 Hausen(CH)**

(74) Vertreter: **Keller, René, Dr. et al
Patentanwälte Dr. René Keller & Partner
Postfach 12
CH-3000 Bern 7(CH)**

## Beschreibung

### Technisches Gebiet

Die Erfindung bezieht sich auf ein Verfahren zur Erzeugung und Verteilung von Geheimschlüsseln, wobei von zwei Endstellen mittels eines PKD-Verfahrens (PKD = Public Key Distribution) mindestens ein gemeinsamer Geheimschlüssel erzeugt wird.

### Stand der Technik

Mit der ständig wachsenden Vernetzung von Informationszentren durch Kommunikationssysteme gewinnt auch die Sicherung der zu übertragenden Daten vor unerwünschten Zugriffen stark an Bedeutung. Aus diesem Grund sind in den letzen Jahren kryptographische Verfahren entwickelt worden, welche es erlauben, mit einem gegebenen Geheimschlüssel Daten mit hoher Geschwindigkeit zu verschlüsseln und mit der gewünschten Sicherheit zu übertragen.

Es stellt sich nun die Frage, wie solche Geheimschlüssel sicher verteilt werden können. Die klassische Antwort lautet so, dass ein zuverlässiger Bote ausgeschickt wird. Da Botengänge verhältnismässig aufwendig sind, insbesondere wenn sie in periodischen Abständen ausgeführt werden müssen, sind sogenannte PKD-Verfahren (PKD = Public Key Distribution) entwickelt worden, welche es ermöglichen, Geheimschlüssel über öffentliche Kanäle zu verteilen.

Aus "An Overview of Public Key Cryptography", Martin E. Hellman, IEEE Communications Society Magazine, November 78, sind solche Verfahren bekannt, insbesondere das Diffie-Hellman-Verfahren. Sie haben zwar den Vorteil, dass immer nur genau zwei Endstellen einen gemeinsamen Geheimschlüssel haben können, erlauben es einer Endstelle allerdings nicht, den Geheimschlüssel gleichzeitig zu authentifizieren, d.h. festzustellen, dass der Geheimschlüssel mit demjenigen der tatsächlich gewünschten anderen Endstelle gemeinsam ist. Es kann also sein, dass zwischen den beiden Endstellen sich ein sog. Spoofer befindet, welcher jeder Endstelle vortäuscht, die jeweils andere Endstelle zu sein, und mit jeder Endstelle einen gemeinsamen Geheimschlüssel erzeugt. Dass sich ein Spoofer zwischen den beiden Endstellen befindet, lässt sich daraus erkennen, dass die beiden Endstellen nicht denselben Geheimschlüssel haben.

In der Patentschrift CH 656 762 wird vorgeschlagen, die Authentifikation der Geheimschlüssel durch einen zusätzlichen Geheimschlüssel zu gewährleisten, welcher entweder vor oder nach einer Installation in den einander entsprechenden Verschlüsselungsgeräten abgespeichert wird. Eine solche Authentifikation bringt jedoch das Problem mit sich, dass entweder das Gerät, welches von einer Endstelle zur anderen gebracht werden muss, bereits geheime Information beinhaltet, oder dass die geheime Informationen selbst (Geheimschlüssel) von einer Endstelle zur anderen gebracht werden muss.

### Darstellung der Erfindung

Aufgabe der vorliegenden Erfindung ist es daher, ein Verfahren zur Erzeugung und Verteilung von Geheimschlüsseln, wobei von zwei Endstellen mittels eines PKD-Verfahrens ein gemeinsamer Geheimschlüssel erzeugt wird, zu schaffen, welches es erlaubt, ohne die Benützung eines geheimen Kanals gemeinsame Geheimschlüssel zu authentifizieren.

Erfindungsgemäss besteht die Lösung darin, dass zur Authentifikation des Geheimschlüssels jede Endstelle unter Verwendung des gemeinsamen Geheimschlüssels einen öffentlichen Kennwert bildet und diese Kennwerte über einen separaten, öffentlichen Hilfskanal miteinander verglichen werden.

In einer bevorzugten Ausführungsform der Erfindung wird als PKD-Verfahren ein Diffie-Hellman-Verfahren verwendet und der öffentliche Kennwert unter Verwendung einer Einwegfunktion erzeugt.

Weitere bevorzugte Ausführungsformen ergeben sich aus den Unteransprüchen.

Der Kern der Erfindung liegt darin, dass der Geheimschlüssel erst nach der Installation des Verschlüsselungsgerätes erzeugt wird und dass er ohne die Benützung eines geheimen Kanals authentifiziert werden kann. Es ist nicht mehr nötig, eine geheime Information, in welcher Form auch immer, zu transportieren.

Im Idealfall handelt es sich beim öffentlichen Hilfskanal um eine authentifizierte Verbindung; in der Praxis wird dieser Anforderung eine Telefonwahlleitung genügen, da hier die Zwischenschaltung eines Spoofers weitgehend verunmöglicht ist.

### Kurze Beschreibung der Zeichnungen

Nachfolgend soll die Erfindung anhand von Ausführungsbeispielen in Verbindung mit der Zeichnung näher erläutert werden. Es zeigen:

Fig. 1 ein Blockschaltbild einer Anordnung zur Erzeugung und Verteilung von Geheimschlüsseln,

Fig. 2a,2b Darstellung von Schalterstellungen eines Kippschalters,

Fig. 3 ein Flussdiagramm eines Verfahrens zur Erzeugung und Verteilung von Geheimschlüsseln, wobei zur Authentifikation eines Geheimschlüssels eine Einwegfunktion verwendet wird, und

Fig. 4 ein Flussdiagramm eines Verfahrens zur Erzeugung und Verteilung von Geheimschlüsseln, wobei zur Authentifikation eines Geheimschlüssels ein Kennwert aus einer Verknüpfung mit einem zweiten Geheimschlüssel gebildet wird.

Wege zur Ausführung der Erfindung

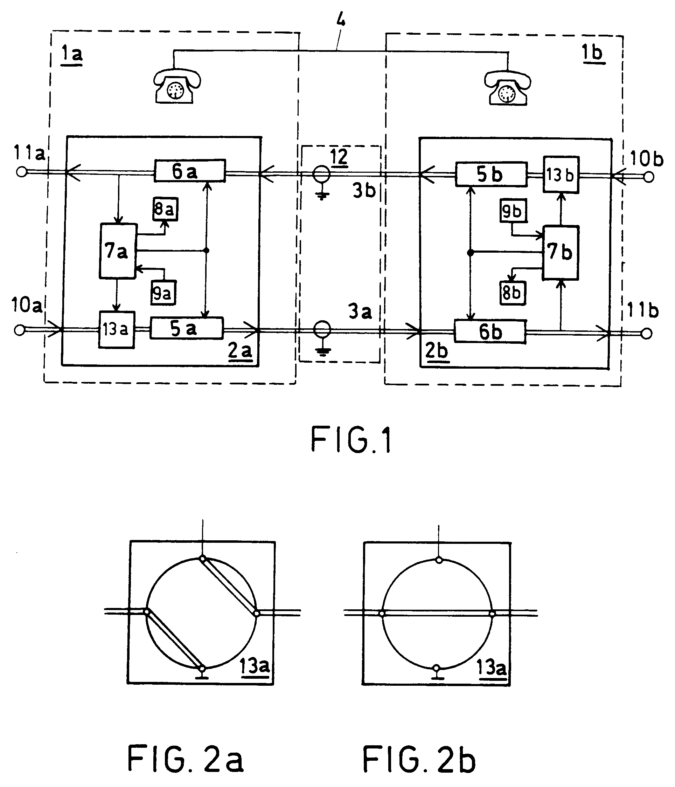

Fig. 1 zeigt ein Blockschaltbild einer Anordnung zur Erzeugung und Verteilung von Geheimschlüsseln und zur verschlüsselten Uebertragung von digitalen Daten. Zwischen einer ersten Endstelle 1a und einer zweiten Endstelle 1b soll ein sicherer Hauptkanal 12 aufgebaut werden. Dieser umfasse zwei Datenleitungen 31,3b. In jeder Endstelle 1a, 1b befindet sich ein Verschlüsselungsgerät 2a,2b. Neben dem Hauptkanal 12 besteht zwischen den beiden Endstellen 1a,1b ein Hilfskanal 4, welcher in diesem Ausführungsbeispiel eine öffentliche Telefonwahlleitung ist.

Da sich die beiden Verschlüsselungsgeräte 2a,2b in wesentlichen nicht unterscheiden, wird im folgenden jeweils nur von einem der beiden gesprochen. Auf das andere wird durch ein hinter einen Schrägstrich gestelltes Bezugszeichen verwiesen.

Ein Verschlüsselungsgerät 2a/2b umfasst einen Chiffrierer 5a/5b, einen Dechiffrierer 6a/6b, einen Schlüsselgenerator 7a/7b, einen Umschalter 13a/13b, eine Ausgabeeinheit 8a/8b und eine Eingabeeinheit 9a/9b.

Die zu übertragenden Daten, welche an einer Eingangsklemme 10a/10b in Klartext anliegen, werden im Chiffrierer 5a/5b z.B. durch eine Modulo 2 Addition eines von einem Geheimschlüssel abhängigen Pseudozufallssignals in bekannter Weise verschlüsselt. Ueber die Datenleitungen 3a/3b werden sie in gesicherter Weise zur anderen Endstelle 1b/1a geschickt, wo sie im Dechiffrierer 6b/6a des Verschlüsselungsgerätes 2b/2a mit demselben Geheimschlüssel, wie er im Chiffrierer 5a/5b verwendet wird, entschlüsselt werden. An einer Ausgangsklemme 11b/11a liegen die Daten somit wieder im Klartext vor.

Ein Schlüsselgenerator 7a/7b erzeugt zusammen mit dem Schlüsselgenerator 7b/7a der jeweils anderen Endstelle einen zur Verschlüsselung verwendeten, gemeinsamen Geheimschlüssel und gibt ihn an den Chiffrierer 5a/5b und den Dechiffrierer 6a/6b aus.

Die Schlüsselgeneratoren 7a,7b der beiden Endstellen 1a,1b können zwecks Erzeugung von Geheimschlüsseln über die Datenleitungen 3a,3b miteinander in Verbindung treten. Dazu ist ein Eingang des Schlüsselgenerators 7a/7b an eine Verbindung zwischen Dechiffrierer 6a/6b und Ausgangsklemme 11a/11b und ein Ausgang desselben mittels des Umschalters 13a/13b an eine Verbindung zwischen Eingangsklemme 10a/10b und Chiffrierer 5a/5b angeschlossen.

Zur Bedienung des Verschlüsselungsgerätes 2a/2b sind die Eingabeeinheit 9a/9b, welche beispielsweise einige Funktionstasten und eine Zehnertastatur umfassen kann, und die Ausgabeeinheit 8a/8b, z.B. in form eines Displays, vorgesehen. Auf diese Weise werden z.B. die Erzeugung von Geheimschlüsseln und die Authentifikation eines solchen veranlasst, oder auch Betriebszustände und Fehlermeldungen angezeigt.

Fig. 2a und 2b zeigen die möglichen Schalterpositionen des Umschalters 13a/13b. Wenn die Schlüsselgeneratoren 7a,7b der beiden Verschlüsselungsgeräte 2a,2b miteinander in Verbindung treten wollen, muss der Umschalter 13a/13b in die Schalterposition Schlüsseltransfer (\\) gebracht werden. Die Datenübertragung ist dann unterbrochen (Fig. 2a). Wenn der Hauptkanal 12 gesichert ist, können Daten übertragen werden und der Umschalter hat die Schalterposition Datentransfer (-) (Fig. 2b). Die momentane Schalterposition kann zusätzlich von der Ausgabeeinheit 8a/8b angezeigt werden.

Nachfolgend wird anhand eines ersten Ausführungsbeispiels ein erfindungsgemässes Verfahren zur Erzeugung und Verteilung von Geheimschlüsseln beschrieben.

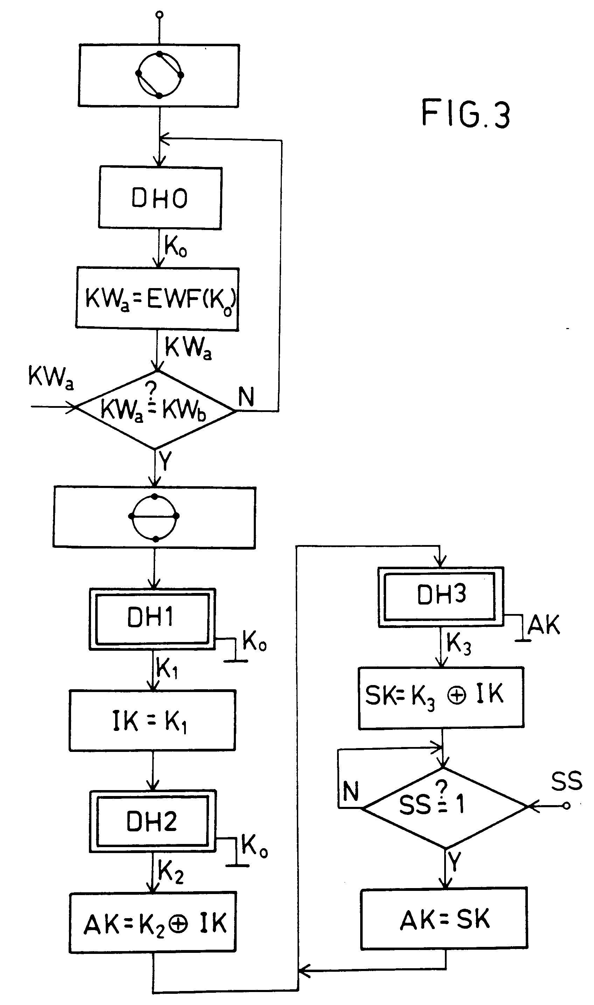

Fig. 3 zeigt ein Flussdiagramm eines solchen Verfahrens. Es wird davon ausgegangen, dass ein neuer Hauptkanal 12 in Betrieb genommen werden soll. Die Verschlüsselungsgeräte 2a,2b sind installiert; die Chiffrierer 5a,5b und die Dechiffrierer 6a,6b arbeiten noch ohne Geheimschlüssel, d.h. im Klarbetrieb. Die Datenleitungen 3a,3b sind funktionstüchtig, aber wegen der fehlenden Geheimschlüssel noch nicht gesichert.

Als erstes wird der Umschalter 13a/13b in die Schalterposition Schlüsseltransfer (\\) gebracht. Dann wird mit einem Diffie-Hellman-Verfahren DHO in bekannter Weise ein erster gemeinsamer Geheimschlüssel $K_0$ erzeugt.

Die Authentifikation dieses gemeinsamen Geheimschlüssels, welche den Kern der Erfindung darstellt, umfasst grundsätzlich zwei Verfahrensschritte. In einem ersten wird mit Hilfe einer Einwegfunktion EWF in jedem Verschlüsselungsgerät 2a/2b je ein öffentlicher Kennwert $KW_a$,$KW_b$ gebildet. In einem zweiten Verfahrensschritt werden diese beiden Kennwerte $KW_a$,$KW_b$ der jeweiligen Ausgabeeinheit 8a,8b zugeführt und über den separaten öffentlichen Hilfskanal 4 miteinander verglichen. Stimmen sie überein (V), so wird auch der gemeinsame Geheimschlüssel $K_0$ mit der tatsächlich gewünschten andern Endstelle geteilt. Das heisst, der Geheimschlüssel $K_0$ ist authentisch. Stimmen die beiden Kennwerte $KW_a, KW_b$ nicht überein (N), so muss nochmals von vorne begonnen werden.

Bei Uebereinstimmung (Y) wird nun der Hauptkanal 12 mit dem authentischen Geheimschlüssel $K_0$ gesichert, d.h. Chiffrierer 5a/5b und Dechiffrierer 6a/6b, welche bis anhin im Klarbetrieb, d.h. ohne Geheimschlüssel arbeiteten, werden mit dem Geheimschlüssel $K_o$ versehen. In Fig. 2 wird dies durch einen doppelt umrahmten und mit $K_0$ geerdeten Block dargestellt. Da der Hauptkanal 12 jetzt gesichert ist, kann mit der Uebertragung der Daten begonnen werden. Der Umschalter 13a/13b wird dazu in die Schalterstellung Datentransfer (-) gebracht.

Ueber den gesicherten Hauptkanal 12 wird mit einem Diffie-Hellman-Verfahren DH1 ein zweiter Geheimschlüssel $K_1$ erzeugt, welcher als Authentifikationsschlüssel IK des zwischen den beiden Endstellen 1a,1b bestehenden Hauptkanals 12 benutzt wird. Er wird im Schlüsselgenerator 7a/7b gesichert abgespeichert und bei jedem Wechsel des Geheimschlüssels zur Authentifikation des neuen Geheimschlüssels eingesetzt.

Mit einem weiteren Diffie-Hellman-Verfahren DH2 wird der Geheimschlüssel $K_2$ erzeugt, aus welchem der zur Verschlüsselung der zu übertragenden Daten eingesetzte aktive Geheimschlüssel AK gewonnen wird. Und zwar ergibt sich der aktive Geheimschlüssel AK durch eine Verknüpfung des Geheimschlüssels $K_2$ mit dem Authentifikationsschlüssel IK. Der Hauptkanal 12, welcher bis jetzt mit dem ersten Geheimschlüssel $K_0$ gesichert worden ist, wird nun mit dem aktiven Geheimschlüssel AK gesichert.

Da einerseits die Erzeugung eines neuen aktiven Geheimschlüssels AK eine gewisse Zeit benötigt, andererseits aber ein Auswechseln dieses Geheimschlüssels möglichst schnell vor sich gehen soll, wird, um den Datenaustausch nicht länger als nötig zu unterbrechen, gleich anschliessend an die Berechnung des aktiven Geheimschlüssels AK ein Reserveschlüssel SK erzeugt und sicher abgespeichert. Der Reserveschlüssel SK ergibt sich aus einer Verknüpfung eines mit einem Diffie-Hellman-Verfahren DH3 generierten Geheimschlüssels $K_3$ mit dem Authentifikationsschlüssel IK in der gleichen Weise der aktive Geheimschlüssel AK.

Im Verlaufe eines Diffie-Hellman-Verfahrens müssen bekanntlich von jedem Schlüsselgenerator zweimal eine ganzzahlige Potenzfunktion berechnet und Zwischenwerte über die Datenleitungen 3a/3b ausgetauscht werden. Da das Austauschen der Zwischenwerte sehr schnell vor sich geht, das Berechnen der ganzzahligen Potenzfunktion aber Sekunden beanspruchen kann, ist es von Vorteil, den Umschalter 13a/13b nur gerade während des Austauschens der Zwischenwerte von Datentransfer (-) auf Schlüsseltransfer (\\) umzuschalten, ihn aber während der übrigen Berechnungen in der Schalterposition Datentransfer (-) zu belassen.

Damit ist eine erste Erzeugung und Verteilung von Geheimschlüsseln abgeschlossen. Wenn nach einer gewissen Zeit das Auswechseln des aktiven Geheimschlüssels AK angezeigt ist, wird ein Steuersignal SS von 0 auf 1 gesetzt und eine Warteschleife verlassen (Y). Der Reserveschlüssel SK wird zum aktiven Geheimschlüssel AK. Ein neuer Reserveschlüssel SK wird wie bereits beschrieben erzeugt und abgespeichert. Inzwischen ist das Steuersignal SS wieder auf 0 gesetzt, so dass das Verfahren zur Erzeugung und Verteilung von Geheimschlüsseln wieder in der Warteschleife (N) bis zum nächsten Auswechseln des aktiven Geheimschlüssels verbleibt.

Nachfolgend wird anhand eines zweiten Ausführungsbeispiels ein weiteres Verfahren zur Authentifikation von Geheimschlüsseln beschrieben. Dieses Ausführungsbeispiel unterscheidet sich vom ersten dadurch, dass zur Authentifikation mit einem Diffie-Hellman-Verfahren ein zweiter Geheimschlüssel ($K_{01}$) erzeugt wird, dieser Geheimschlüssel mit dem ersten Geheimschlüssel verknüpft wird und das Resultat aus dieser Verknüpfung angezeigt und verglichen wird.

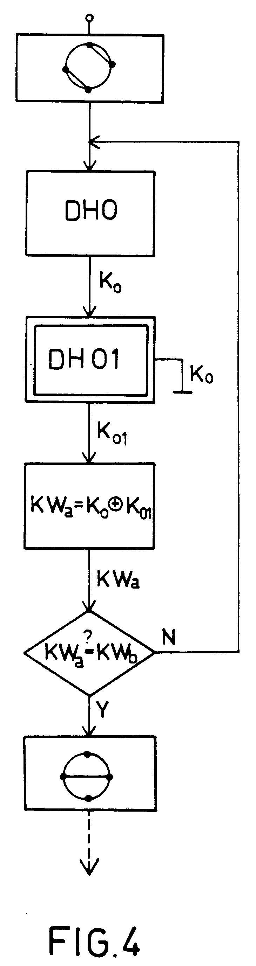

Fig. 4 zeigt ein Flussdiagramm eines Teils der Verfahrens. Wie früher wird davon ausgegangen, dass ein neuer Hauptkanal 12 unter den bereits angeführten Bedingungen in Betrieb genommen werden soll.

Das Verfahren beginnt damit, dass, nachdem der Umschalter in die Schalterposition Schlüsseltransfer (\\) gebracht worden ist, die beiden Endstellen 1a,1b mit einem Diffie-Hellman-Verfahren DHO einen ersten gemeinsamen Geheimschlüssel $K_0$ erzeugen. Mit diesem Geheimschlüssel $K_0$ wird der Hauptkanal 12 gesichert. Anschliessend wird mit einem Diffie-Hellman-Verfahren DHO1 der Geheimschlüssel $K_{01}$ gebildet. Die Schlüssel $K_0$ und $K_{01}$ werden dann miteinander zu einem Kennwert $KW_a/KW_b$ verknüpft. Dies geschieht vorzugsweise mit einer bitweisen Modulo 2 Addition. Die Kennwerte $KW_a/KW_b$ werden der jeweiligen Aufgabeeinheit 8a/8b zugeführt und über den separaten öffentlichen Hilfskanal 4 miteinander verglichen. Stimmen sie überein (Y), so sind die beiden gemeinsamen Geheimschlüssel $K_0, K_{01}$ authentisch. Stimmen die beiden Kennwerte $KW_a/KW_b$ nicht überein (N), so muss nochmals von vorne begonnen werden.

Bei Uebereinstimmung (Y) werden nun nacheinander der Authentifikationsschlüssel IK, der Aktivschlüssel AK und der Reserveschlüssel SK in der gleichen Weise erzeugt, wie im ersten Ausführungsbeispiel bereits beschrieben.

Im folgenden werden als bevorzugte Ausführungsformen der Erfindung einige Aenderungen der beschriebenen Ausführungsbeispiele erläutert.

Bekanntlich verwendet ein Diffie-Hellman-Verfahren als Einwegfunktion eine ganzzahlige Potenzfunktion der Form

$$F = a^K \bmod q \qquad (I)$$

wobei sich ein Funktionswert F aus der Potenzierung einer bekannten Basis a mit einer geheimen Zufallszahl x modulo einer bekannten Zahl q ergibt. Es ist deshalb besonders vorteilhaft, eben diese Einwegfunktion zur Berechnung der Kennwerte $KW_a, KW_b$ zu verwenden. Das Argument der ganzzahligen Potenzfunktion ist dann nicht eine geheime Zufallszahl x, sondern der erste Geheimschlüssel $K_0$:

$$KW_a = EWF (K_0) = a^{K_0} \bmod q \qquad (II)$$

Es ist üblich, den Geheimschlüssel $K_0$ in der Form einer Dezimalzahl darzustellen. Je mehr Dezimalstellen der Geheimschlüssel aufweist, umso schwieriger ist es, ihn zu knacken. Die Anzahl der Dezimalstellen ist begrenzt durch die Leistungsfähigkeit eines zur Auswertung der ganzzahligen Potenzfunktion verwendeten Mikroprozessors. Heute stellen hundert Dezimalstellen eine gut handhabbare Länge dar.

Wird der Kennwert $KW_a/KW_b$ direkt durch die Ausübung der ganzzahligen Potenzfunktion nach Formel (II) aus dem Geheimschlüssel $K_0$ gewonnen, so hat er selbstverständlich gleichviele Dezimalstellen wie letzterer. Gemäss dem obigen Ausführungsbeispiel müssten somit hundert Ziffern fehlerfrei über die Telefonwahlleitung ausgetauscht werden. In Anbetracht dieser Tatsache entspricht es einer bevorzugten Ausführungsform der Erfindung, einen Kennwert $KW_a$ zu erzeugen, welcher kürzer als der Geheimschlüssel ist. Der Kennwert $KW_a$ ergibt sich aus dem Geheimschlüssel $K_0$ neu wie folgt:

$$KW_a = RO [EWF (K_0)] = RO [a^{K_0} \bmod q] \qquad (III)$$

RO stellt eine reduzierende Operation dar, die z.B. aus einer 100-stelligen eine 10-stellige Dezimalzahl erzeugt. Die reduzierende Operation RO kann z.B. darin bestehen, dass aus dem Funktionswert F der ganzzahligen Potentzfunktion eine Prüfsumme gebildet wird, oder dass aus einer Anzahl ausgewählter Dezimalstellen des Funktionswertes F eine neue Zahl gebildet wird. Ein Wertebereich der reduzierenden Operation RO soll aber genügend gross sein, dass ein rein zufälliges Uebereinstimmen der über den separaten, öffentlichen Hilfskanal 4 ausgetauschten Kennwerte $KW_a, KW_b$ ausgeschlossen werden kann.

Ist z.B. eine Endstelle 1a in einer Zentrale und die andere Endstelle 1b in einer Zweigstelle eines Unternehmens, welche es mit der Zentrale zu verbinden gilt, so genügt es im allgemeinen, wenn die Zentrale die Zweigstelle anruft. Eine besonders sichere Variante wird darin gesehen, dass die Telefonwahlleitung von jeder Endstelle aus je einmal aufgebaut wird.

Bekanntlich erlaubt das Diffie-Hellman-Verfahren nicht, einen gemeinsam erzeugten Geheimschlüssel zu authentifizieren. Daher muss beim Erzeugen jedes neuen Geheimschlüssels darauf geachtet werden, dass sich nicht ein Spoofer einschalten kann. Deshalb wird sogleich nach der Authentifikation eines Geheimschlüssels $K_0$ ein Authentifikationsschlüssel IK erzeugt und abgespeichert. Dieser wird beim Generieren eines neuen aktiven Geheimschlüssels AK jeweils als Parameter eingesetzt.

Das erfindungsgemässe Verfahren lässt sich auf alle PKD-Verfahren anwenden. Entscheidend ist, dass ein gemeinsamer Geheimschlüssel vorhanden ist, aus dem auf gegebene Weise in jeder Endstelle ein öffentlicher Kennwert $KW_a, KW_b$ gewonnen wird, und dass diese beiden Kennwerte $KW_a, KW_b$ über einen separaten, öffentlichen Hilfskanal verglichen werden. An Stelle einer Telefonwahlleitung kann als Hilfskanal z.B. auch eine separate Datenverbindung dienen.

Der Kennwert kann mit mindestens einer an sich beliebigen Einwegfunktion EWF erzeugt werden. Die reduzierende Operation RO lässt sich auf die verschiedenartigste Weise realisieren. Sie ist weder geheim noch unabdingbar und wird deshalb auf eine möglichst einfache Art implementiert.

Abschliessend kann gesagt werden, dass das erfindungsgemässe Verfahren erlaubt, die Authentifikation eines gemeinsamen Geheimschlüssels über einen separaten, öffentlichen Hilfskanal auszuführen, ohne in einem Verschlüsselungsgerät a priori eine geheime Information abspeichern oder einen geheimen Kanal benützen zu müssen.

**Patentansprüche**

1. Verfahren zur Erzeugung und Verteilung von Geheimschlüsseln, wobei
   a) von zwei Endstellen mittels eines PKD-Verfahrens (PKD = Public Key Distribution) mindestens ein gemeinsamer Geheimschlüssel erzeugt wird,
   dadurch gekennzeichnet, dass

b) zur Authentifikation des Geheimschlüssels ($K_0$) jede Endstelle (1a,1b) unter Verwendung des gemeinsamen Geheimschlüssels ($K_0$) einen öffentlichen Kennwert ($KW_a/KW_b$) bildet,

c) und diese Kennwerte ($KW_a/KW_b$) über einen separaten, öffentlichen Hilfskanal (4) miteinander verglichen werden.

2. Verfahren nach Anspruch 1, dadurch gekennzeichnet, dass der gemeinsame Geheimschlüssel ($K_0$) mittels eines Diffie-Hellman-Verfahrens (DHO) erzeugt wird.

3. Verfahren nach Anspruch 1, dadurch gekennzeichnet, dass der öffentliche Kennwert ($KW_a/KW_b$) unter Verwendung einer Einwegfunktion (EWF) erzeugt wird.

4. Verfahren nach Anspruch 3, dadurch gekennzeichnet, dass als Einwegfunktion (EWF) eine ganzzahlige Potenzfunktion verwendet wird.

5. Verfahren nach Anspruch 1, dadurch gekennzeichnet, dass, zur Authentifikation des ersten gemeinsamen Geheimschlüssels ($K_0$)

a) mittels eines Diffie-Hellman-Verfahrens (DHO1) ein zweiter Geheimschlüssel ($K_{01}$) erzeugt wird, und

b) der öffentliche Kennwert ($KW_a/KW_b$) durch eine Verknüpfung der beiden Geheimschlüssel ($K_0,K_{01}$) erzeugt wird.

6. Verfahren nach Anspruch 5, dadurch gekennzeichnet, dass die Verknüpfung der beiden Geheimschlüssel ($K_0,K_{01}$) eine bitweise Modulo 2 Addition ist.

7. Verfahren nach Anspruch 1, dadurch gekennzeichnet, dass der Kennwert ($KW_a/KW_b$) kürzer als der Geheimschlüssel ($K_0$) ist.

8. Verfahren nach Anspruch 7, dadurch gekennzeichnet, dass

a) nur ausgewählte Dezimalstellen des Kennwertes ($KW_a/KW_b$) zur Anzeige gebracht werden,

b) und als Hilfskanal (4) eine öffentliche Telefonwahlleitung verwendet wird

9. Verfahren nach Anspruch B, dadurch gekennzeichnet, dass die Telefonwahlleitung von jeder Endstelle (1a,1b) je einmal aufgebaut wird.

10. Verfahren nach Anspruch 4 oder 6, dadurch gekennzeichnet, dass

a) der erste gemeinsam erzeugte Geheimschlüssel ($K_0$) eines neu aufgebauten Hauptkanals (12) authentifiziert wird und dass

b) über den mit dem ersten Geheimschlüssel ($K_0$) gesicherten Hauptkanal (12) weitere gemeinsame Geheimschlüssel erzeugt werden, wobei einer davon als Authentifikationsschlüssel (IK) eingesetzt wird.

**Claims**

1. Process for the manufacture and allocation of coded keys, in which respect

a) two end locations produce at least one common coded key by means of public key distribution (PKD),

characterised in that

b) each end location (1a, 1b,) whilst using the common coded key ($K_0$), forms a public identification value ($KW_a/KW_b$) for the purpose of authentication of the coded key ($K_0$);

c) and these identification values ($KW_a/KW_b$) are compared to each other via a separate public auxiliary channel (4).

2. Process according to claim 1, characterised in that the common coded key ($K_0$) is produced by means of a Diffie-Hellman process (DHO).

3. Process according to claim 1, characterised in that the public identification value ($KW_a/KW_b$) is produced by means of a one-way function (EWF).

4. Process according to claim 3, characterised in that the one-way function (EWF) is a whole number potential function.

5. Process according to claim 1, characterised in that, for the purpose of authentication of the first common coded key ($K_0$),

a) a second coded key ($K_{01}$) is produced by means of a Diffie-Hellman process (DHO1), and

b) the public identification value ($KW_a/KW_b$) is produced by a combination of the two coded keys ($K_0$, $K_{01}$).

6. Process according to claim 5, characterised in that the combination of the two coded keys ($K_0$, $K_{01}$) is a bit Modulo 2 addition.

7. Process according to claim 1, characterised in that the identification value ($KW_a/KW_b$) is shorter than the coded key ($K_0$).

8. Process according to claim 7, characterised in that

a) only selected decimal figures of the identification value ($KW_a$/$KW_b$) are indicated,

b) and a public telephone-dialling line is used as auxiliary channel (4).

9. Process according to claim 8, characterised in that the telephone-dialling line is established once by each end location (1a, 1b).

10. Process according to claim 4 or 6, characterised in that

a) the first mutually produced coded key ($K_0$) of a newly established main channel (12) is authenticated, and that

b) further coded keys are produced via the main channel (12) which is secured by the first coded key ($K_0$), in which respect one of them is used as authentication key.

**Revendications**

1. Procédé pour la production et la distribution de clés secrètes, dans lequel:

a) au moins une clé secrète commune est produite par deux postes d'abonné au moyen d'un procédé PKD (PKD = Public Key Distribution),

caractérisé en ce que

b) on forme une valeur caractéristique publique ($KW_a$/$KW_b$) pour l'authentification de la clé secrète ($K_0$) de chaque poste d'abonné (1a, 1b) en utilisant la clé secrète commune ($K_0$),

c) et on compare ces valeurs caractéristiques ($KW_a$/$KN_b$) l'une à l'autre par un canal auxiliaire public et séparé (4).

2. Procédé selon la revendication 1, caractérisé en ce que la clé secrète commune ($K_0$) est produite au moyen d'un procédé Diffie-Hellman (DHO).

3. Procédé selon la revendication 1, caractérisé en ce que la valeur caractéristique publique ($KW_a$/$KW_b$) est produite en utilisant une fonction unidirectionnelle (EWF).

4. Procédé selon la revendication 3, caractérisé en ce que l'on utilise en tant que fonction unidirectionnelle (EWF) une fonction de puissance à nombre entier.

5. Procédé selon la revendication 1, caractérisé en ce que pour l'authentification de la première clé secrète commune ($K_0$),

a) on produit au moyen d'un procédé Diffie-Hellman (DHO1) une seconde clé secrète ($K_{01}$) et

b) on produit la valeur caractéristique publique ($KW_a$/$KW_b$) par une liaison logique entre les deux clés secrètes ($K_0$, $K_{01}$).

6. Procédé selon la revendication 5, caractérisé en ce que la liaison logique entre les deux clés secrètes ($K_0$, $K_{01}$) est constituée par un modulo 2 d'addition à bits.

7. Procédé selon la revendication 1, caractérisé en ce que la valeur caractéristique ($KW_a$/$KW_b$) est plus courte que la clé secrète ($K_0$).

8. Procédé selon la revendication 7, caractérisé en ce que

a) seules des positions décimales choisies de la valeur caractéristique ($KW_a$/$KW_b$) sont appliquées à l'affichage,

b) et en ce que l'on utilise en tant que canal auxiliaire (4) une ligne téléphonique commutée publique.

9. Procédé selon la revendication 8, caractérisé en ce que la ligne téléphonique commutée est formée respectivement une fois par chaque poste d'abonné (1a, 1b).

10. Procédé selon la revendication 4 ou 6, caractérisé en ce que

a) la première clé secrète commune produite ($K_0$) d'un nouveau canal principal formé (12) est authentifiée et en ce que

b) d'autres clés secrètes communes sont produites par le canal principal (12) protégé par la première clé secrète ($K_0$), l'une d'entre elles étant utilisée comme clé d'authentification (IK).

EP 0 307 627 B1

FIG.1

FIG. 2a          FIG. 2b

FIG.3

$DHO$

$K_o$

$KW_a = EWF(K_o)$

$KW_a$

$KW_a$

$KW_a \overset{?}{=} KW_b$  N

Y

$DH1$  $K_o$

$K_1$

$IK = K_1$

$DH2$  $K_o$

$K_2$

$AK = K_2 \oplus IK$

$DH3$  $AK$

$K_3$

$SK = K_3 \oplus IK$

$SS \overset{?}{=} 1$  SS

N

Y

$AK = SK$

**DHO**

$K_o$

**DH O1**  $\sqcap K_o$

$K_{01}$

$KW_a = K_o \oplus K_{01}$

$KW_a$

$KW_a \overset{?}{=} KW_b$  N

Y

FIG.4